# FASCICULE DE BREVET EUROPEEN

(11) **EP 3 700 126 B1**
(45) Date de publication et mention de la délivrance du brevet: **13.09.2023**
(21) Numéro de dépôt: 20156558.7
(22) Date de dépôt: 11.02.2020
(51) Int. Cl.: H04L 9/08

(54) **DISPOSITIF DE FONCTION PHYSIQUEMENT NON-CLONABLE À TRANSISTORS À GRILLE FLOTTANTE, ET PROCÉDÉ DE RÉALISATION**
VORRICHTUNG MIT EINER PHYSISCH NICHT KLONIERBAREN FUNKTION MIT TRANSISTOREN MIT SCHWEBENDEM GATE, UND HERSTELLUNGSVERFAHREN
PHYSICALLY NON-CLONABLE FUNCTION DEVICE WITH FLOATING SCREEN TRANSISTORS, AND METHOD FOR MANUFACTURING SAME

(30) Priorité: 22.02.2019 FR 1901791
(43) Date de publication de la demande: 26.08.2020
(73) Titulaire: STMicroelectronics (Rousset) SAS, 13790 Rousset (FR)
(72) Inventeur: LA ROSA, Francesco, 13790 ROUSSET (FR)
(74) Mandataire: Casalonga

(56) Documents cités:
- US-A- 5 268 320
- MUDIT BHARGAVA ET AL: "A High Reliability PUF Using Hot Carrier Injection Based Response Reinforcement", IACR, INTERNATIONAL ASSOCIATION FOR CRYPTOLOGIC RESEARCH, vol. 20150505:192811, 5 mai 2015 (2015-05-05), pages 1-18, XP061018395,
- Christoph Bohm ET AL: "A Reliable Low-area Low-power PUF-based Key Generator", , 14 novembre 2016 (2016-11-14), XP055640814, Extrait de l'Internet: URL:https://upcommons.upc.edu/bitstream/ha ndle/2117/99214/FCTRU_2016_12_A_Reliable_L ow.pdf?sequence=1&isAllowed=y
- YU CAI ET AL: "Error patterns in MLC NAND flash memory", DESIGN, AUTOMATION AND TEST IN EUROPE, EDA CONSORTIUM, 111 WEST SAINT JOHN STREET, SUITE 220 SAN JOSE CA 95113 USA, 12 mars 2012 (2012-03-12), pages 521-526, XP058021651, DOI: 10.1109/DATE.2012.6176524 ISBN: 978-3-9810801-8-6

## Description

Des modes de mise en oeuvre et de réalisation de l'invention concernent les fonctions physiquement non clonables (PUF : Physical Unclonable Function), en particulier dans des structures ayant des transistors à grille flottante.

Une fonction physiquement non clonable permet de générer automatiquement un code unique non prédictible qui dépend de caractéristiques physiques aléatoires. Ainsi, le clonage d'une telle fonction est très difficile voire impossible.

D'une part, il est souhaitable que les fonctions physiquement non clonables soient suffisamment robustes pour être invariables notamment dans le temps, suite à des utilisations répétées, et en cas de variations de température. D'autre part, il est souhaitable que les variations aléatoires des caractéristiques physiques soient facilement identifiables pour distinguer sans équivoque différentes données. En outre, il est souhaitable que les réalisations de fonctions physiquement non clonables ne nécessitent pas ou peu d'étapes de fabrication dédiées.

Les codes uniques non-prédictibles comportent typiquement une suite de données aléatoires et sont principalement utilisés en tant que clés de chiffrement. Ces données sont typiquement secrètes.

Cela étant, il existe des techniques mettant en oeuvre notamment des microscopies capacitives à balayage (SCM : Scanning Capacitance Microscopy) ou des microscopies électroniques à balayage (SEM : Scanning Electronic Microscopy), capables d'extraire les données secrètes, c'est-à-dire capable de lire les données par mesure, inspection et/ou analyse.

C'est particulièrement le cas de structures classiques qui visent à bénéficier de robustesse dans la rétention des données et de lisibilité des données. En effet, les techniques classiques qui augmentent la capacité de rétention et de discrimination des données pour la lecture, augmentent généralement aussi la capacité de discrimination des données dans les techniques d'extractions.

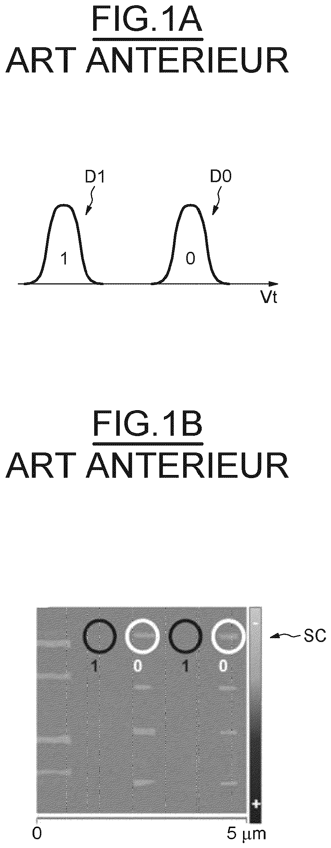

La figure 1A illustre une technique classique visant à bénéficier de robustesse dans la rétention des données et de lisibilité des données, dans laquelle des données sont matérialisées par des niveaux de tensions de seuil Vt de transistors à grille flottante. Les niveaux de tension de seuil sont imposés par des injections de charges positives ou négatives dans les grilles flottantes. Des premiers transistors présentant une tension de seuil Vt appartenant à une distribution de niveau bas D1 permettent de matérialiser une première valeur logique, par exemple « 1 ». Des deuxièmes transistors présentant une tension de seuil Vt appartenant à une distribution de niveau haut D0 permettent de matérialiser une deuxième valeur logique, par exemple « 0 ».

La figure 1B illustre une image de microscopie capacitive à balayage SC de transistors stockant des données selon la technique présentée en relation avec la figure 1A. La suite de données 1010 stockée est facilement extractible si la position des transistors est connue. En effet, il est possible sur l'image SC de distinguer les régions de canal des premiers transistors (dont la tension de seuil appartient à la distribution de niveau bas D1) dans les cercles noirs, et des deuxièmes transistors (dont la tension de seuil appartient à la distribution de niveau haut D0) dans les cercles blancs. Cela est bien entendu problématique. Il est par ailleurs connu de la technique les enseignements suivants :

MUDIT BHARGAVA ET AL: "A High Reliability PUF Using Hot Carrier Injection Based Response Reinforcement", IACR, ePrint, vol. 20150505:192811, 05.05.2015 et

Christoph Bohm ET AL: "A Reliable Low-area Low-power PUF-based Key Generator", 14.11.2016. https://upcommons.upc.edu/bitstream/handle/2117/99214/ FCTRU_2016_12_A_Reliable_Low.pdf?sequence=1&isAllowed=y

Il existe donc un besoin de proposer des structures de fonction physiquement non clonable robustes vis-à-vis de variations extérieures ou de vieillissement, dont les données sont clairement discriminables en lecture, tout en étant difficilement extractibles. Il serait en outre appréciable que les structures soient faciles à réaliser dans les technologies existantes.

Selon un aspect, il est proposé un dispositif de fonction physiquement non-clonable, comportant un ensemble de paires de transistors à grille flottante destinés à avoir une même tension de seuil mais présentant chacun une tension de seuil effective appartenant à une distribution aléatoire commune, un moyen de lecture différentielle configuré pour mesurer la différence entre les tensions de seuil effectives des paires de transistors à grille flottante et pour identifier des paires de transistors à grille flottante dites non fiables dont la différence entre les tensions de seuil effectives est inférieure à une valeur de marge, et un moyen d'écriture configuré pour décaler la tension de seuil effective d'un transistor à grille flottante de chaque paire non fiable, de façon contrôlée et limitée de sorte que la tension de seuil décalée reste à l'intérieur de ladite distribution aléatoire commune.

Ainsi, le dispositif selon cet aspect bénéficie des avantages du stockage de données par des transistors à grille flottantes, c'est-à-dire à très bonnes capacités de rétentions, robustes, et parfaitement maîtrisés dans leurs fabrications et utilisations. Les tensions de seuil effectives appartenant toutes à une distribution aléatoire commune, la fonction est non seulement physiquement non clonable mais en outre impossible à extraire par les techniques de microscopie de l'art. Le décalage d'une tension de seuil effective dans les paires non fiables permet de garantir la viabilité de cette technique, notamment pour assurer la distinction entre deux tensions de seuil effectives éventuellement égales ou très proches.

La distribution aléatoire commune est avantageusement une distribution de tensions de seuil de transistors à grille flottante vierges n'ayant jamais été écrits.

Selon un mode de réalisation, le moyen de lecture différentielle est en outre configuré pour lire un état logique d'une paire de transistors à grille flottante matérialisé par une différence entre les valeurs des tensions de seuil effectives de la paire supérieure à la valeur de marge.

Selon un mode de réalisation, le moyen d'écriture est configuré pour décaler la tension de seuil effective d'un transistor à grille flottante de chaque paire non fiable de façon à augmenter la différence entre les tensions de seuil effectives au-delà de la valeur de marge.

Selon un mode de réalisation, le moyen d'écriture, pour décaler la tension de seuil effective d'un transistor à grille flottante, est configuré pour générer une séquence d'impulsions d'écriture comprenant chacune une injection d'une quantité élémentaire de charges dans la grille flottante du transistor à grille flottante.

Selon un mode de réalisation, le moyen de lecture différentielle est configuré pour faire une vérification de marge entre certaines au moins desdites impulsions d'écriture, la vérification de marge comprenant une comparaison de la différence des valeurs des tensions de seuil effectives de la paire de transistors à grille flottante avec la valeur de marge.

Selon un mode de réalisation, les états logiques de l'ensemble de paires de transistors à grille flottante sont destinés à former une suite de données aléatoires.

Un circuit intégré peut comporter un dispositif de fonction physiquement non-clonable tel que défini selon ce dernier mode de réalisation, et un dispositif de chiffrement configuré pour chiffrer des données en utilisant une clé, la clé comprenant avantageusement ladite suite de données aléatoires.

Selon un autre aspect, il est proposé un procédé comprenant une réalisation d'une fonction physiquement non clonable, ladite réalisation comportant :
- une fabrication d'un ensemble de paires de transistors à grille flottante, destinés à avoir une même tension de seuil ;
- une dispersion aléatoire des valeurs effectives des tensions de seuil des transistors à grille flottante formant une distribution aléatoire commune des tensions de seuil des transistors à grille flottante ;
- une mesure de la différence entre les tensions de seuil effectives des paires de transistors à grille flottante, et une identification de paires de transistors à grille flottante dites non fiables dont la différence entre les tensions de seuil effectives est inférieure à une valeur de marge ;
- un décalage de la tension de seuil effective d'un transistor à grille flottante de chaque paire non fiable, de façon contrôlée et limitée de sorte que la tension de seuil décalée reste à l'intérieur de ladite distribution aléatoire commune.

Selon un mode de mise en oeuvre, la distribution aléatoire commune est une distribution de tensions de seuil de transistors à grille flottante vierges n'ayant jamais été écrits.

Selon un mode de mise en oeuvre, le procédé comprend en outre une lecture d'un état logique d'une paire de transistors à grille flottante matérialisé par une différence entre les valeurs des tensions de seuil effectives de la paire supérieure à la valeur de marge.

Par exemple, le décalage comprend une augmentation de la différence entre les tensions de seuil effectives des transistors à grille flottante des paires non fiables au-delà de la valeur de marge.

Selon un mode de mise en oeuvre, le décalage de la tension de seuil effective de l'un des transistors à grille flottante d'une paire non fiable comprend une séquence d'impulsions d'écriture comprenant chacune une injection d'une quantité élémentaire de charges dans la grille flottante du transistor à grille flottante.

Avantageusement, le décalage comprend une vérification de marge entre certaines au moins des impulsions d'écriture, la vérification de marge comprenant une mesure de la différence des valeurs des tensions de seuil effectives de la paire de transistors à grille flottante et une comparaison de la différence mesurée avec la valeur de marge.

Selon un mode de mise en oeuvre, les états logiques de l'ensemble de paires de transistors à grille flottante sont destinés à former une suite de données aléatoires.

Un procédé de chiffrement peut avantageusement comporter un chiffrement de données utilisant une clé, la clé comprenant la suite de données aléatoires obtenue par un procédé tel que défini selon ce dernier mode de mise en oeuvre.

D'autres avantages et caractéristiques de l'invention apparaîtront à l'examen de la description détaillée de mode de mise en oeuvre et de réalisation, nullement limitatifs, et des dessins annexés sur lesquels :
[Fig 1A] précédemment décrite, illustre des caractéristiques de mémoires classiques ;
[Fig 1B] précédemment décrite, illustre des caractéristiques de mémoires classiques ;
[Fig 2] illustre un exemple de réalisation de l'invention ;
[Fig 3] illustre un exemple de réalisation de l'invention ;
[Fig 4] illustre un exemple de réalisation de l'invention ;
[Fig 5] illustre un exemple de réalisation de l'invention ;
[Fig 6] illustre un exemple de réalisation de l'invention ;
[Fig 7] illustre un exemple de réalisation de l'invention ;
[Fig 8] illustre un exemple de mise en oeuvre de l'invention ;
[Fig 9] illustre un exemple de mise en oeuvre de l'invention ;
[Fig 10] illustre un exemple de réalisation de l'invention.

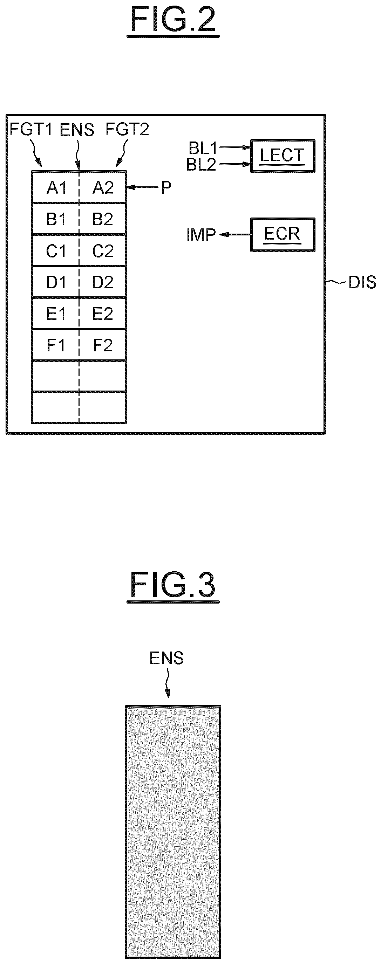

La figure 2 représente un exemple de réalisation d'un dispositif DIS de fonction physiquement non-clonable.

Le dispositif DIS comporte un ensemble ENS de paires P de transistors à grille flottante FGT1, FGT2.

Un transistor à grille flottante comporte classiquement une région de source et une région de drain implantées dans un corps semiconducteur, une région de canal dans le corps entre les régions de source et de drain, une grille flottante conductrice électriquement isolée de la région de canal et d'une grille de commande surmontant la grille flottante. La tension de seuil d'un transistor à grille flottante est la tension entre la région de source et la grille de commande à partir de laquelle la région de canal est désertée et conductrice.

Un transistor à grille flottante est écrit lorsque des charges ont été injectées dans la grille flottante et y sont piégées. Les charges modifient, suivant leur signe, la tension de seuil du transistor écrit, on parle alors de programmation ou d'effacement.

Les transistors à grille flottante FGT1, FGT2 de l'ensemble ENS sont destinés à présenter la même tension de seuil.

Cela étant, les tensions de seuil effectives, c'est-à-dire les valeurs réelles des tensions de seuil, varient légèrement suivant une dispersion aléatoire, par exemple due à des aléas physiques de fabrication. Ce type de dispersion est habituel et connu en soi. Les tensions de seuil effectives des transistors à grille flottante référencés FGT1 de chaque paire sont référencés A1-F1 et les tensions de seuil effectives des transistors référencés FGT2 de chaque paire sont référencés A2-F2.

Ainsi, les transistors à grille flottante FGT1, FGT2 de l'ensemble ENS présentent chacun une tension de seuil effective appartenant à une distribution aléatoire commune.

En particulier, les transistors à grille flottante FGT1, FGT2 peuvent avantageusement être maintenus dans un état vierge, c'est-à-dire qu'aucune injection de charge n'est réalisée dans leurs grilles flottantes. Ainsi la distribution aléatoire commune est, dans ce cas particulier, une distribution de tensions de seuil Vteff de transistors à grille flottante vierges n'ayant jamais été écrits.

La figure 3 illustre une image de microscopie capacitive à balayage des transistors à grille flottante appartenant à l'ensemble ENS. Chaque transistor à grille flottante présente une tension de seuil effective appartenant à une distribution commune de tensions de seuil Vteff de transistors à grille flottante vierges. Ainsi, aucune distinction des valeurs des tensions de seuil n'est possible par les techniques de microscopies actuelles.

En alternatives, les transistors à grille flottante FGT1, FGT2 de l'ensemble ENS peuvent éventuellement être tous programmés, c'est-à-dire comportant tous des charges négatives dans leurs grilles flottantes, ou être tous effacés, c'est-à-dire comportant une injection de charges positives dans leurs grilles flottantes.

On se réfère à nouveau à la figure 2.

Le dispositif DIS comporte un moyen de lecture différentielle LECT configuré pour mesurer la différence entre les tensions de seuil effectives des paires P de transistors à grille flottante FGT1, FGT2.

Le moyen de lecture différentielle LECT comporte deux entrées différentielles auxquelles sont respectivement couplés les transistors FGT1, FGT2 de chaque paire P, notamment via des lignes de bits respectives BL1, BL2.

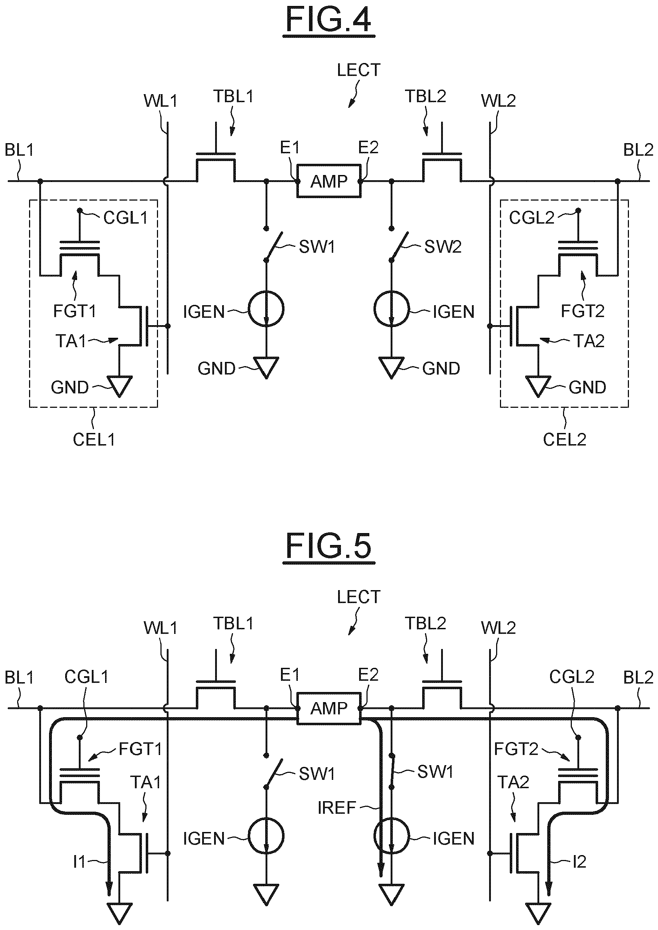

A cet égard, on se réfère désormais aux figures 4 et 5.

La figure 4 représente un exemple de réalisation du moyen de lecture différentielle LECT couplés aux transistors FGT1, FGT2 d'une paire, via les lignes de bits respectives BL1, BL2.

Dans cet exemple, les transistors à grille flottante FGT1, FGT2, appartiennent à des cellules mémoires respectives CEL1, CEL2, dans lesquelles un transistor d'accès TA1, TA2 est relié à la source du transistor à grille flottante FGT1, FGT2 sur son drain, et à la masse GND sur sa source.

Les transistors d'accès TA1, TA2 sont commandés sur leurs grilles par un signal transmis sur une ligne de mot respective WL1 WL2. Comme il apparaîtra dans la suite, les lignes de mots WL1, WL2 peuvent éventuellement être communes à une paire, c'est-à-dire reliées électriquement, voire formées par une même ligne électriquement conductrice.

Les grilles de commande des transistors à grille flottante FGT1, FGT2 sont reliées à une ligne de grille de commande respective CGL1, CGL2. De même, les lignes de grille de commande CGL1, CGL2 peuvent éventuellement être communes à une paire de transistors à grille flottante, c'est-à-dire reliées électriquement voire formées par une même ligne électriquement conductrice.

Les drains des transistors à grilles flottante FGT1, FGT2 sont quant à eux reliés à une ligne de bits respective BL1, BL2.

La ligne de bits BL1 permet de coupler l'un des transistors à grille flottante FGT1 de la paire à une première entrée E1 d'un amplificateur de lecture AMP. La ligne de bits BL2 permet de coupler l'autre transistor à grille flottante FGT2 de la paire à une deuxième entrée E2 de l'amplificateur de lecture AMP.

Les autres transistors à grilles flottantes de l'ensemble ENS de paires P sont couplés à l'amplificateur de lecture AMP de la même manière, et des commutateurs d'entrée respectifs TBL1, TBL2 permettent de sélection les lignes de bits BL1, BL2 des paires voulues.

En outre, le moyen de lecture LECT comporte des générateurs de courant de référence IGEN générant un courant de référence IREF tiré sur la première entrée E1 ou la deuxième entrée E2, selon des positions d'interrupteurs respectifs SW1, SW2.

La figure 5 représente un exemple de réalisation du moyen de lecture différentielle LECT en fonctionnement.

L'amplificateur de lecture AMP est configuré pour amplifier une différence entre le courant écoulé sur sa première entrée E1, et le courant écoulé sur sa deuxième entrée E2.

A cet égard, les commutateurs d'entrée TBL1, TBL2 sont commandés de façon à coupler les lignes de bits BL1, BL2 de la paire de transistors à grille flottante souhaitée.

Le transistor d'accès TA1, TA2 de chaque transistor à grille flottante FGT1, FGT2 est commandé passant par une tension transmise sur les lignes de mots WL1, WL2. De même, les transistors à grille flottante FGT1, FGT2 sont commandés par une tension de grille de commande transmise sur les lignes de grille de commande CGL1, CGL2.

Le transistor à grille flottante FGT1 de la paire est ainsi disposé à écouler un courant de lecture I1 de la première entrée E1 vers la masse GND. L'autre transistor à grille flottante FGT2 de la paire est de même disposé à écouler un courant de lecture I2 de la deuxième entrée E2 vers la masse GND.

Le courant de lecture I1, I2 étant représentatif de la tension de seuil effective du transistor à grille flottante respectif FGT1, FGT2, la différence des courants I1, I2 est représentative de la différence entre les tensions de seuil effectives des paires de transistors à grille flottante FGT1, FGT2.

Ainsi, le moyen de lecture différentielle LECT est capable de mesurer la différence entre les tensions de seuil effectives des paires de transistors à grille flottante FGT1, FGT2.

En outre, un courant supplémentaire IREF, généré par l'un des générateurs de courant de référence IGEN, peut être ajouté à l'un des courants I1, I2 écoulés sur les entrées E1, E2 via la commande des interrupteurs SW1, SW2. Dans l'exemple représenté, l'interrupteur SW2 est fermé et le courant IREF est ajouté au courant I2 sur la deuxième entrée E2.

Cela permet de mesurer une différence entre les tensions de seuil effectives à partir d'une certaine marge. La valeur de la marge correspond au courant IREF, représentatif d'un écart de tension de référence.

La valeur de marge est choisie notamment en fonction de la précision du moyen de lecture différentielle LECT.

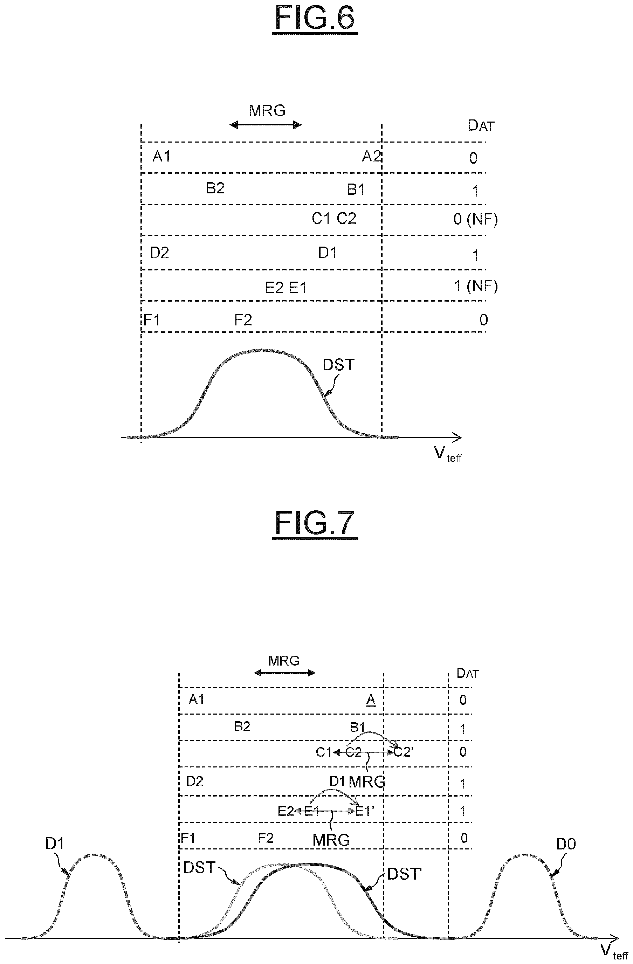

On se réfère désormais à la figure 6.

La figure 6 représente un exemple de différentes valeurs de tensions de seuils A1, B1, C1, D1, E1, F1 de l'un des transistors à grille flottante FGT1 de chaque paire de l'ensemble ENS, et les valeurs des tensions de seuil A2, B2, C2, D2, E2, F2 de l'autre transistor FGT2 respectif de chaque paire.

Les valeurs A1-F1, A2-F2 appartiennent toutes à la distribution aléatoire commune DST de tensions de seuil effectives Vteff.

Le moyen de lecture différentielle LECT selon un exemple de réalisation, par exemple tel que décrit en référence aux figures 4 et 5, est aussi configuré pour lire un état logique DAT de chaque paire de transistors à grille flottante FGT1, FGT2. L'état logique DAT est matérialisé par la différence entre les valeurs des tensions de seuil effectives de la paire supérieure à la valeur de marge MRG.

Par exemple, si X1>X2+MRG, alors DAT=1, et si X2>X1+MRG, alors DAT=0, avec X1 l'une quelconque des valeurs A1-F1 et respectivement X2.

Ainsi, des états logiques sont obtenus de façon physiquement non clonable par l'écart aléatoire des valeurs des tensions de seuil effectives des deux transistors d'une paire. Etant donné que ces tensions de seuil effectives sont proches et appartiennent à la distribution aléatoire commune DST, il est impossible, par inspections microscopiques, de discriminer l'une ou l'autre des deux données stockées.

On remarquera sur la figure que certains couples de valeurs de tensions de seuil, C1 C2 et E1 E2, peuvent être proches et présenter un écart inférieur à la valeur de marge MRG. Les paires de transistors à grille flottante présentant ces couples de valeurs sont dites non fiables NF.

On se réfère à nouveau à la figure 2.

Le moyen de lecture différentielle LECT est configuré pour identifier des paires P de transistors à grille flottante dites non fiables NF, par exemple selon une mesure différentielle telle que décrite ci-avant en relation avec les figures 4 et 5. Une paire P de transistors à grille flottante FGT1, FGT2 est dite non fiable si la différence entre les tensions de seuil effectives des transistors à grille flottante est inférieure à une valeur de marge, par exemple telle que la valeur de marge MRG décrite ci-avant en relation avec les figures 4 et 5.

Le dispositif DIS comporte enfin un moyen d'écriture ECR capable notamment de générer des impulsions d'écritures IMP.

Les impulsions d'écriture IMP sont configurées pour obtenir des conditions de programmation douce sur les transistors à grille flottante, de façon à incrémenter la valeur de tension de seuil des transistors à grille flottante suivant un effet d'injection de porteurs chauds dans la grille flottante.

En d'autres termes, contrairement à des impulsions de programmation ou d'effacement de mémoire EEPROM habituelles dans lesquelles les tensions drain-grille flottante sont de l'ordre de 8 à 12 volts, les impulsions d'écriture IMP sont limitées de sorte que les tensions drain-grille flottante sont par exemple de l'ordre de 4,5 à 5 volts.

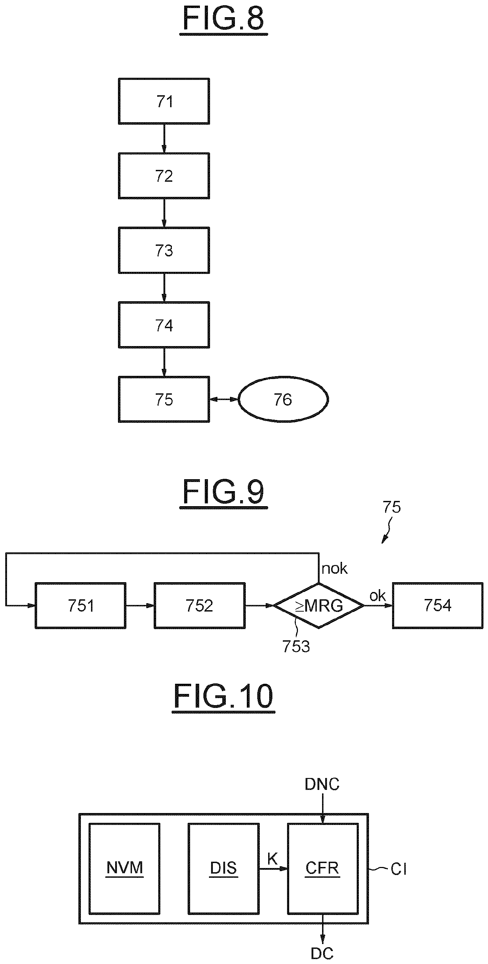

En outre, la génération des impulsions d'écriture est contrôlée, c'est-à-dire qu'elle comporte par exemple des phases de vérification pour réguler la génération des impulsions. A cet égard on pourra se référer à l'exemple de mise en oeuvre décrit ci-après en relation avec la figure 9.

Ainsi, contrairement aux programmations et effacements classiques qui créent deux populations de transistors à grille flottante dont les tensions de seuil sont rigoureusement distinctes (par exemple tel qu'illustré par la figure 1A), les impulsions d'écriture IMP contrôlées et limitées permettent de décaler la tension de seuil de façon suffisamment légère pour pouvoir considérer raisonnablement que la nouvelle tension de seuil décalée appartient à la même distribution aléatoire commune.

On se réfère à cet égard à la figure 7.

La figure 7 reprend l'exemple représenté en figure 6, dans lequel les tensions de seuil effectives C2 et E1 de l'un des transistors à grille flottante de chaque paire non fiables NF ont été décalées à des valeurs décalées C2', E1'.

Le moyen d'écriture ECR est configuré pour décaler la tension de seuil effective C2, E1 d'un transistor à grille flottante de chaque paire non fiable NF de façon à augmenter la différence entre les tensions de seuil effectives au-delà de la valeur de marge MRG.

Cela permettra de pouvoir lire, de façon fiable dans les paires identifiées non fiables NF, un état logique DAT matérialisé par une différence entre les valeurs des tensions de seuil effectives de la paire supérieure à la valeur de marge MRG.

Bien entendu, d'un point de vue théorique, cela implique une légère modification de la distribution DST initiale en une distribution décalée DST'. Cela étant il est raisonnable de considérer que les valeurs décalées C2' et E1' appartiennent à la distribution initiale, c'est-à-dire la distribution aléatoire commune DST obtenue à la fabrication. En effet, en comparaison avec une distribution D1 de tensions de seuil de transistors classiquement programmés et avec une distribution D0 de tensions de seuil de transistors classiquement effacés (correspondant également à la figure 1A), les distributions DST et DST' sont très similaires et considérées identiques.

En d'autres termes, le moyen d'écriture ECR est configuré pour décaler la tension de seuil effective d'un transistor à grille flottante de chaque paire non fiable NF, de façon contrôlée et limitée à l'intérieur de ladite distribution aléatoire commune DST.

En tout état de cause, on considère que les valeurs des tensions de seuil décalées sont situées à l'intérieur de la distribution aléatoire commune DST tant qu'il est impossible de les distinguer par des techniques de microscopie à balayage.

Les populations de transistors programmés et effacés des distributions D1, D0 peuvent être distinguées au microscope, mais il est impossible de faire la distinction entre les populations de transistors des distributions initiale DST et décalée DST'.

La figure 8 représente un exemple de mise en oeuvre d'un procédé comprenant notamment une réalisation d'une fonction physiquement non clonable. Certaines références portent sur les figures 2 à 7 précédemment décrites.

Le procédé comprend une étape 71 de fabrication d'un ensemble ENS de paires P de transistors à grille flottante FGT1, FGT2. La fabrication des transistors est identique de sorte que les transistors fabriqués sont destinés à avoir une même tension de seuil.

Par exemple, les transistors ainsi fabriqués sont destinés à avoir des tensions de seuil de transistors à grille flottante vierges n'ayant jamais été écrits.

Le procédé comprend une dispersion aléatoire 72 des valeurs effectives des tensions de seuil Vteff des transistors à grille flottante. La dispersion est notamment due à des aléas physiques de fabrication, et ainsi directement accomplie, au moins en partie, lors de l'étape de fabrication 71. La dispersion des valeurs effectives forme une distribution aléatoire commune DST des tensions de seuil des transistors à grille flottante de l'ensemble ENS.

Il pourrait être envisagé de mettre en oeuvre, lors d'une étape dédiée ou lors de l'étape de fabrication 71, des conditions intensifiant la dispersion aléatoire.

Le procédé comprend une étape 73 de mesure de la différence entre les tensions de seuil effectives Vteff des paires de transistors à grille flottante, et une identification 74 de paires de transistors à grille flottante dites non fiables NF dont la différence entre les tensions de seuil effectives est inférieure à une valeur de marge MRG.

Enfin, le procédé comprend un décalage 75 de la tension de seuil effective d'un transistor à grille flottante de chaque paire non fiable NF, de façon contrôlée et limitée à l'intérieur de ladite distribution aléatoire commune DST.

Le décalage 75 est mis en oeuvre de façon à augmenter la différence entre les tensions de seuil effectives des transistors à grille flottante des paires non fiables NF, au-delà de la valeur de marge MRG.

On se réfère à la figure 9, illustrant un exemple de mise en oeuvre du décalage 75.

Dans cet exemple, le décalage 75 de la tension de seuil effective comprend une séquence d'impulsions d'écriture 751.

Chaque impulsion d'écriture 751 comprend une injection d'une quantité élémentaire de charges dans la grille flottante du transistor à grille flottante dont la tension de seuil est décalée.

Dans la séquence, une vérification de marge (752, 753) et faite entre certaines au moins des impulsions d'écriture 751. La vérification de marge comprend une mesure 752 de la différence des valeurs des tensions de seuil effectives de la paire de transistors à grille flottante, après la ou les impulsion(s) d'écriture 751, et puis une comparaison 753 de la différence mesurée avec la valeur de marge MRG.

Si la différence mesurée 752 est inférieure à la valeur de marge MRG (nok), alors un nouveau cycle comprenant une impulsion d'écriture 751 et une vérification de marge 752, 753 est ajouté à la séquence.

Lorsque la différence mesurée 752 est supérieure ou égale à la valeur de marge MRG (ok), alors le décalage 75 prend fin 754. Grâce aux vérifications de marge 752, 753 dans la séquence d'impulsions d'écriture 751, les tensions de seuil ont été décalées de façon contrôlée afin de ne pas aboutir à des valeurs de tensions de seuil situées en dehors de la distribution aléatoire commune DST obtenue à la fabrication.

On se réfère à nouveau à la figure 8.

Le procédé peut comprendre en outre une étape 76 de lecture d'un état logique DAT d'une paire de transistors à grille flottante matérialisé par une différence entre les valeurs des tensions de seuil effectives Vteff de la paire, supérieure à la valeur de marge MRG.

Les états logiques DAT, ainsi formés dans l'ensemble ENS de paires P de transistors à grille flottante FGT1, FGT2 peuvent par exemple être destinés à former une suite de données aléatoires.

La figure 10 représente un circuit intégré CI comportant un dispositif de fonction physiquement non-clonable DIS tel que décrit précédemment en relation avec les figures 2 à 7, par exemple obtenu par un procédé tel que décrit ci-avant en relation avec les figures 8 et 9.

Dans le dispositif DIS, les états logiques DAT de l'ensemble ENS de paires P de transistors à grille flottante FGT1, FGT2 sont donc destinés à former une suite de données aléatoires.

Dans cet exemple, le circuit intégré CI est capable d'exécuter un procédé de chiffrement comportant un chiffrement CFR de données DNC utilisant une clé K, la clé K comprenant la suite de données aléatoires formée et stockée dans l'ensemble ENS de paires de transistors à grille flottante.

Un moyen de chiffrement CFR, incorporé au circuit intégré CI, est configuré pour chiffrer les données DNC en utilisant la clé K.

En outre, le circuit intégré CI peut comporter une mémoire non volatile NVM, comportant des cellules mémoires ayant chacune un transistor d'état à grille flottante, avantageusement fabriqué au cours de la même étape 71 de fabrication de l'ensemble ENS de paires P de transistors à grille flottante FGT1, FGT2.

En résumé il a été présenté une technique de fonction physiquement non clonable, dans laquelle un état logique est défini par la différence relative entre deux informations appartenant à une même distribution. Les données ne peuvent pas être récupérées par des méthodologies de l'art connu : ni la microscopie à capacité de balayage (SCM), ni la microscopie électronique à balayage (SEM). La technique ne nécessite pas de processus spécifiques et dédiés.

Par ailleurs l'invention n'est pas limitée à ces modes de réalisation mais en embrasse toutes les variantes, par exemple, les exemples de réalisation décrits ci-avant en relation avec les figures 4 et 5 bien qu'ayant trait à un amplificateur de lecture différentielle en courant, la lecture différentielle peut être faite en tension, ou encore le sens du décalage illustré par les figures 6 et 7, bien que représenté dans le sens croissant, peut aussi être décroissant suivant une injection de charges de signe opposé.

## Revendications

1. Dispositif (DIS) de fonction physiquement non-clonable, comportant un ensemble (ENS) de paires (P) de transistors à grille flottante (FGT1, FGT2) destinés à avoir une même tension de seuil mais présentant chacun une tension de seuil effective (Vteff) appartenant à une distribution aléatoire commune (DST), des états logiques étant obtenus de façon physiquement non clonable par l'écart aléatoire des valeurs des tensions de seuil effectives des deux transistors d'une paire, un moyen de lecture différentielle (LECT) configuré pour mesurer la différence entre les tensions de seuil effectives (Vteff) des paires (P) de transistors à grille flottante (FGT1, FGT2) et pour identifier des paires de transistors à grille flottante dites non fiables (NF) dont la différence entre les tensions de seuil effectives est inférieure à une valeur de marge (MRG), et un moyen d'écriture (ECR) configuré pour décaler la tension de seuil effective (C2, E1) d'un transistor à grille flottante de chaque paire non fiable (NF), de façon contrôlée et limitée de sorte que la tension de seuil décalée reste à l'intérieur de ladite distribution aléatoire commune (DST) et de façon à augmenter la différence entre les tensions de seuil effectives au-delà de la valeur de marge (MRG).

2. Dispositif selon la revendication 1, dans lequel la distribution aléatoire commune (DST) est une distribution de tensions de seuil (Vteff) de transistors à grille flottante vierges n'ayant jamais été écrits.

3. Dispositif selon l'une des revendications 1 ou 2, dans lequel le moyen de lecture différentielle (LECT) est en outre configuré pour lire un état logique (DAT) d'une paire de transistors à grille flottante matérialisé par une différence entre les valeurs des tensions de seuil effectives de la paire supérieure à la valeur de marge (MRG).

4. Dispositif selon l'une des revendications précédentes, dans lequel le moyen d'écriture (ECR), pour décaler la tension de seuil effective (C2, E1) d'un transistor à grille flottante, est configuré pour générer une séquence d'impulsions d'écriture (751) comprenant chacune une injection d'une quantité élémentaire de charges dans la grille flottante du transistor à grille flottante.

5. Dispositif selon la revendication 4, dans lequel le moyen de lecture différentielle (LECT) est configuré pour faire une vérification de marge (752, 753) entre certaines au moins desdites impulsions d'écriture (751), la vérification de marge comprenant une comparaison (753) de la différence des valeurs des tensions de seuil effectives (752) de la paire de transistors à grille flottante avec la valeur de marge (MRG).

6. Dispositif selon l'une des revendications précédentes prise en combinaison avec la revendication 3, dans lequel les états logiques (DAT) de l'ensemble (ENS) de paires de transistors à grille flottante sont destinés à former une suite de données aléatoires.

7. Circuit intégré (CI), comportant un dispositif (DIS) de fonction physiquement non-clonable selon la revendication 6 et un dispositif de chiffrement (CFR) configuré pour chiffrer des données (DNC) en utilisant une clé (K), la clé (K) comprenant ladite suite de données aléatoires.

8. Procédé comprenant une réalisation d'une fonction physiquement non clonable, ladite réalisation comportant :
- une fabrication (71) d'un ensemble (ENS) de paires (P) de transistors à grille flottante (FGT1, FGT2), destinés à avoir une même tension de seuil ;
- une dispersion aléatoire (72) des valeurs effectives des tensions de seuil (Vteff) des transistors à grille flottante formant une distribution aléatoire commune (DST) des tensions de seuil des transistors à grille flottante, des états logiques étant obtenus de façon physiquement non clonable par l'écart aléatoire des valeurs des tensions de seuil effectives des deux transistors d'une paire ;
- une mesure (73) de la différence entre les tensions de seuil effectives (Vteff) des paires de transistors à grille flottante, et une identification (74) de paires de transistors à grille flottante dites non fiables (NF) dont la différence entre les tensions de seuil effectives est inférieure à une valeur de marge (MRG) ;
- un décalage (75) de la tension de seuil effective (C2, E1) d'un transistor à grille flottante de chaque paire non fiable (NF), de façon contrôlée et limitée de sorte que la tension de seuil décalée reste à l'intérieur de ladite distribution aléatoire commune (DST) et de façon à augmenter la différence entre les tensions de seuil effectives au-delà de la valeur de marge (MRG).

9. Procédé selon la revendication 8, dans lequel la distribution aléatoire commune (DST) est une distribution de tensions de seuil de transistors à grille flottante vierges n'ayant jamais été écrits.

10. Procédé selon l'une des revendications 8 ou 9, comprenant en outre une lecture (76) d'un état logique (DAT) d'une paire de transistors à grille flottante matérialisé par une différence entre les valeurs des tensions de seuil effectives (Vteff) de la paire supérieure à la valeur de marge (MRG).

11. Procédé selon l'une des revendications 8 à 10, dans lequel ledit décalage (75) de la tension de seuil effective de l'un des transistors à grille flottante d'une paire non fiable (NF) comprend une séquence d'impulsions d'écriture (751) comprenant chacune une injection d'une quantité élémentaire de charges dans la grille flottante du transistor à grille flottante.

12. Procédé selon la revendication 11, dans lequel ledit décalage (75) comprend une vérification de marge (752, 753) entre certaines au moins des impulsions d'écriture (751), la vérification de marge comprenant une mesure (752) de la différence des valeurs des tensions de seuil effectives de la paire de transistors à grille flottante et une comparaison (753) de la différence mesurée avec la valeur de marge (MRG).

13. Procédé selon l'une des revendications 8 à 12 prise en combinaison avec la revendication 10, dans lequel les états logiques (DAT) de l'ensemble (ENS) de paires de transistors à grille flottante sont destinés à former une suite de données aléatoires.

14. Procédé de chiffrement comportant un chiffrement (CFR) de données (DNC) utilisant une clé (K), la clé (K) comprenant une suite de données aléatoires, le procédé de chiffrement comprenant l'obtention de la suite de données aléatoires par un procédé de fonction physiquement non-clonable selon la revendication 13.

## Patentansprüche

1. Vorrichtung (DIS) mit einer physisch nicht klonbaren Funktion, eine Einheit (ENS) an Transistorpaaren (P) mit schwebendem Gate (FGT1, FGT2) beinhaltend, die dazu bestimmt sind, eine selbe Schwellenspannung aufzuweisen, die aber jeweils eine wirksame Schwellenspannung (Vteff) aufweisen, die einer gemeinsamen zufälligen Verteilung (DST) angehören, wobei logische Zustände physisch nicht klonbar durch die zufällige Abweichung der Werte der wirksamen Schwellenspannungen der beiden Transistoren eines Paares erhalten werden, ein Differenzlesemittel (LECT), konfiguriert, um die Differenz zwischen den wirksamen Schwellenspannungen (Vteff) der Transistorpaare (P) mit schwebendem Gate (FGT1, FGT2) zu messen, und um sogenannte nicht zuverlässige Transistorpaare mit schwebendem Gate (NF) zu identifizieren, deren Differenz zwischen den wirksamen Schwellenspannungen geringer als ein Margenwert (MRG) ist, und ein Schreibmittel (ECR), konfiguriert, um die wirksame Schwellenspannung (C2, E1) eines Transistors mit schwebendem Gate eines jeden nicht zuverlässigen Paares (NF) kontrolliert und begrenzt zu verschieben, sodass die verschobene Schwellenspannung innerhalb der gemeinsamen zufälligen Verteilung (DST) verbleibt, und um die Differenz zwischen den wirksamen Schwellenspannungen über den Margenwert (MRG) hinaus zu erhöhen.

2. Vorrichtung nach Anspruch 1, wobei die gemeinsame zufällige Verteilung (DST) eine Verteilung von Schwellenspannungen (Vteff) von leeren Transistoren mit schwebendem Gate ist, die niemals beschrieben worden sind.

3. Vorrichtung nach einem der Ansprüche 1 oder 2, wobei das Differenzlesemittel (LECT) weiter konfiguriert ist, um einen logischen Zustand (DAT) eines Transistorpaares mit schwebendem Gate zu lesen, der durch eine Differenz zwischen den Werten der wirksamen Schwellenspannungen des Paares vergegenständlicht ist, die größer als der Margenwert (MRG) ist.

4. Vorrichtung nach einem der vorstehenden Ansprüche, wobei das Schreibmittel (ECR) zum Verschieben der wirksamen Schwellenspannung (C2, E1) eines Transistors mit schwebendem Gate konfiguriert ist, um eine Folge von Schreibimpulsen (751) zu generieren, die jeweils eine Injektion einer elementaren Menge an Ladungen in das schwebende Gate des Transistors mit schwebendem Gate umfassen.

5. Vorrichtung nach Anspruch 4, wobei das Differenzlesemittel (LECT) konfiguriert ist, um eine Margenüberprüfung (752, 753) mindestens unter bestimmten der Schreibimpulse (751) durchzuführen, wobei die Margenüberprüfung einen Vergleich (753) der Differenz der Werte der wirksamen Schwellenspannungen (752) des Transistorpaares mit schwebendem Gate mit dem Margenwert (MRG) umfasst.

6. Vorrichtung nach einem der vorstehenden Ansprüche, in Kombination mit Anspruch 3, wobei die logischen Zustände (DAT) der Einheit (ENS) an Transistorpaaren mit schwebendem Gate dazu bestimmt sind, eine Folge von Zufallsdaten zu bilden.

7. Integrierte Schaltung (CI), eine Vorrichtung (DIS) mit einer physisch nicht klonbaren Funktion nach Anspruch 6, und eine Chiffriervorrichtung (CFR) beinhaltend, konfiguriert, um Daten (DNC) durch Verwenden eines Schlüssels (K) zu chiffrieren, wobei der Schlüssel (K) die Folge von Zufallsdaten umfasst.

8. Verfahren, umfassend die Ausführung einer physisch nicht klonbaren Funktion, wobei die Ausführung Folgendes beinhaltet:
- Herstellung (71) einer Einheit (ENS) an Transistorpaaren (P) mit schwebendem Gate (FGT1, FGT2), die dazu bestimmt sind, eine selbe Schwellenspannung aufzuweisen;
- zufällige Streuung (72) der wirksamen Werte der Schwellenspannungen (Vteff) der Transistoren mit schwebendem Gate, die eine gemeinsame zufällige Verteilung (DST) der Schwellenspannungen der Transistoren mit schwebendem Gate bilden, wobei logische Zustände physisch nicht klonbar durch die zufällige Abweichung der Werte der wirksamen Schwellenspannungen der beiden Transistoren eines Paares erhalten werden;
- Messung (73) der Differenz zwischen den wirksamen Schwellenspannungen (Vteff) der Transistorpaare mit schwebendem Gate, und eine Identifizierung der sogenannten nicht zuverlässigen Transistorpaare mit schwebendem Gate (NF), deren Differenz zwischen den wirksamen Schwellenspannungen geringer als ein Margenwert (MRG) ist;
- kontrolliert und begrenzt Verschieben (75) der wirksamen Schwellenspannung (C2, E1) eines Transistors mit schwebendem Gate eines jeden nicht zuverlässigen Paares (NF), sodass die verschobene Schwellenspannung innerhalb der gemeinsamen zufälligen Verteilung (DST) verbleibt, und um die Differenz zwischen den wirksamen Schwellenspannungen über den Margenwert (MRG) hinaus zu erhöhen.

9. Verfahren nach Anspruch 8, wobei die gemeinsame zufällige Verteilung (DST) eine Verteilung von Schwellenspannungen von leeren Transistoren mit schwebendem Gate ist, die niemals beschrieben worden sind.

10. Verfahren nach einem der Ansprüche 8 oder 9, weiter ein Lesen (76) eines logischen Zustandes (DAT) eines Transistorpaares mit schwebendem Gate umfassend, der durch eine Differenz zwischen den Werten der wirksamen Schwellenspannungen (Vteff) des Paares vergegenständlicht ist, die größer als der Margenwert (MRG) ist.

11. Verfahren nach einem der Ansprüche 8 bis 10, wobei der Versatz (75) der wirksamen Schwellenspannung des einen der Transistoren mit schwebendem Gate eines nicht zuverlässigen Paares (NF) eine Folge von Schreibimpulsen (751) umfasst, die jeweils eine Injektion einer elementaren Menge an Ladungen in das schwebende Gate des Transistors mit schwebendem Gate umfassen.

12. Verfahren nach Anspruch 11, wobei der Versatz (75) eine Margenüberprüfung (752, 753) mindestens unter bestimmten der Schreibimpulse (751) umfasst, wobei die Margenüberprüfung eine Messung (752) der Differenz der Werte der wirksamen Schwellenspannungen des Transistorpaares mit schwebendem Gate, und einen Vergleich (753) der gemessenen Differenz mit dem Margenwert (MRG) umfasst.

13. Verfahren nach einem der Ansprüche 8 bis 12, in Kombination mit Anspruch 10, wobei die logischen Zustände (DAT) der Einheit (ENS) an Transistorpaaren mit schwebendem Gate dazu bestimmt sind, eine Folge von Zufallsdaten zu bilden.

14. Chiffrierverfahren, ein Chiffrieren (CFR) von Daten (DNC) beinhaltend, das einen Schlüssel (K) verwendet, wobei der Schlüssel (K) eine Folge von Zufallsdaten umfasst, wobei das Chiffrierverfahren den Erhalt der Folge von Zufallsdaten durch ein Verfahren einer physisch nicht klonbaren Funktion nach Anspruch 13 umfasst.

## Claims

1. A physically unclonable function device (DIS), including a set (ENS) of the pairs (P) of floating-gate transistors (FGT1, FGT2) intended to have the same threshold voltage but each having an effective threshold voltage (Vteff) belonging to a common random distribution (DST), logic states being obtained in a physically unclonable way by the random deviation of the values of the effective threshold voltages of the two transistors of a pair, a differential read means (LECT) configured to measure the difference between the effective threshold voltages (Vteff) of the pairs (P) of floating-gate transistors (FGT1, FGT2) and to identify pairs of floating-gate transistors called unreliable floating-gate transistors (NF) whose difference between the effective threshold voltages is less than a margin value (MRG), and write means (ECR) configured to shift the effective threshold voltage (C2, El) of one floating-gate transistor of each unreliable pair (NF), in a controlled and limited way such that the shifted threshold voltage remains within said common random distribution (DST) and so as to increase the difference between the effective threshold voltages beyond the margin value (MRG).

2. The device according to claim 1, wherein the common random distribution (DST) is a distribution of threshold voltages (Vteff) of blank floating-gate transistors that have never been written.

3. The device according to one of claims 1 or 2, wherein the differential read means (LECT) is further configured to read a logic state (DAT) of a pair of floating-gate transistors materialised by a difference between the values of the effective threshold voltages of the pair greater than the margin value (MRG).

4. The device according to one of the preceding claims, wherein the write means (ECR), for shifting the effective threshold voltage (C2, El) of a floating-gate transistor, is configured to generate a sequence of write pulses (751) each comprising an injection of an elementary amount of charges into the floating gate of the floating-gate transistor.

5. The device according to claim 4, wherein the differential read means (LECT) is configured to perform a margin check (752, 753) between at least some of said write pulses (751), the margin check comprising a comparison (753) of the difference of the values of the effective threshold voltages (752) of the pair of floating-gate transistors with the margin value (MRG).

6. The device according to one of the preceding claims as combined with claim 3, wherein the logic states (DAT) of the set (ENS) of pairs of floating-gate transistors are intended to form a random data stream.

7. An integrated circuit (CI), including a physically unclonable function device (DIS) according to claim 6 and an encryption device (CFR) configured to encrypt data (DNC) using a key (K), the key (K) comprising said random data stream.

8. A method comprising the implementation of a physically unclonable function, said implementation including:
- manufacturing (71) a set (ENS) of pairs (P) of floating-gate transistors (FGT1, FGT2), intended to have the same threshold voltage;
- randomly dispersing (72) the effective values of the threshold voltages (Vteff) of the floating-gate transistors forming a common random distribution (DST) of the threshold voltages of the floating-gate transistors, logic states being obtained in a physically unclonable way by the random deviation of the values of the effective threshold voltages of the two transistors of a pair;
- measuring (73) the difference between the effective threshold voltages (Vteff) of the pairs of floating-gate transistors, and identifying (74) pairs of floating-gate transistors called unreliable pairs of floating-gate transistors (NF) whose difference between the effective threshold voltages is less than a margin value (MRG);
- shifting (75) the effective threshold voltage (C2, El) of a floating-gate transistor of each unreliable pair (NF), in a controlled and limited manner such that the shifted threshold voltage remains within said common random distribution (DST) and so as to increase the difference between the effective threshold voltages beyond the margin value (MRG).

9. The method according to claim 8, wherein the common random distribution (DST) is a distribution of threshold voltages of blank floating-gate transistors that have never been written.

10. The method according to one of claims 8 or 9, further comprising a reading (76) of a logic state (DAT) of a pair of floating-gate transistors materialised by a difference between the values of the effective threshold voltages (Vteff) of the pair greater than the margin value (MRG).

11. The method according to one of claims 8 to 10, wherein said shifting (75) of the effective threshold voltage of one of the floating-gate transistors of an unreliable pair (NF) comprises a sequence of write pulses (751) each comprising an injection of an elementary amount of charges into the floating gate of the floating-gate transistor.

12. The method according to claim 11, wherein said shift (75) comprises a margin check (752, 753) between at least some of the write pulses (751), the margin check comprising a measurement (752) of the difference in the values of the effective threshold voltages of the pair of floating-gate transistors and a comparison (753) of the measured difference with the margin value (MRG).

13. The method according to one of claims 8 to 12 as combined with claim 10, wherein the logic states (DAT) of the set (ENS) of pairs of floating-gate transistors are intended to form a random data stream.

14. An encryption method including an encryption (CFR) of data (DNC) using a key (K), the key (K) comprising a random data stream, the encryption method comprising obtaining the random data stream by a physically unclonable function method according to claim 13.
